# FASCICULE DE BREVET EUROPEEN

(11) **EP 0 678 317 B1**
(45) Date de publication et mention de la délivrance du brevet: **20.02.2002**
(21) Numéro de dépôt: 95400804.1
(22) Date de dépôt: 10.04.1995
(51) Int. Cl.: B01D 3/42, F25J 3/04

(54) **Procédé et installation de séparation d'un mélange gazeux par distillation cryogénique**
Verfahren und Anlage zur Trennung einer Gasmischung durch Tieftemperaturdestillation
Process and plant for separating a gas mixture by cryogenic distillation

(30) Priorité: 22.04.1994 FR 9404865
(43) Date de publication de la demande: 25.10.1995
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Rieth, Norbert, F-75014 Paris (FR); Darredeau, Bernard, F-78500 Sartrouville (FR); Lehman, Jean-Yves, F-94700 Maisons Alfort (FR)
(74) Mandataire: Mercey, Fiona Susan

(56) Documents cités:
- DE-A- 4 030 749
- CRYOGENICS, Juillet 1977 LONDON,GB, pages 383-390, D.J.HERSH ET AL. 'Air separation plant design'

## Description

La présente invention est relative à une installation pour la production de débits variables d'au moins un corps pur par la distillation cryogénique d'un mélange. Elle concerne en premier lieu une installation fonctionnant en marche nominale et capable de passer d'une marche nominale à une marche maximale avec une production bien supérieure à celle obtenue en marche nominale.

Dans une installation de distillation d'air connue de ce type, les éléments constituants de l'installation sont tous surdimensionnés et peuvent avoir des régimes de production réduits, réduction pouvant aller jusqu'à 40% de la production maximale. Il est bien évident qu'une installation conçue pour fonctionner à 100% de sa capacité, et qui ne fonctionnerait qu'à 60% de cette capacité, ne serait pas rentable.

Dans une colonne à plateaux, sans surdimensionnement, seuls des débits excédentaires de 5 à 10% peuvent être acceptés. Au-delà de ces valeurs, le diamètre de la colonne, ainsi que l'écartement des plateaux, doivent être surdimensionnés pour permettre une marge supérieure de plus de 10%.

L'invention a pour but de fournir une installation conçue, dans la mesure du possible, pour fonctionner en marche nominale mais pouvanit fonctionner cependant à une capacité supérieure à celle de la marche nominale, en ne nécessitant qu'un minimum d'adaptations techniques.

A cet effet, l'invention a pour objet une installation de production de débits variables selon la revendication 1.

Les garnissages peuvent être du type ondulé-croisé.

Le mélange distillé dans l'appareil peut être de l'air.

Afin d'épurer le mélange à fractionner et plus particulièrement quand celui-ci est de l'air, l'installation comprend préalablement un système d'épuration du mélange à fractionner du type à adsorption dimensionné pour épurer le débit nominal capable de fonctionner avec un temps de cycle réduit quand le débit à fractionner est supérieur au débit nominal, le système étant capable d'être régénéré par un débit de gaz produit par l'appareil réduit par rapport au débit de régénération en marche nominale de l'appareil dans une proportion inférieure au rapport du débit à fractionner et le débit nominal.

Elle comprend également une ligne d'échange dans laquelle s'effectue un échange thermique indirect entre le mélange à fractionner qui s'y refroidit et au moins un produit de l'appareil qui s'y réchauffe, la ligne d'échange étant dimensionnée sur le régime de production nominale. Le rapporte entre le nombre de passages affectés est préférablement variable selon le régime de production établi.

Ainsi, quand la production est supérieure à la production nominale, le nombre de passages affectés à au moins un produit de l'appareil est réduit par rapport au nombre qui y sont affectés en marche nominale, et les passages ainsi rendus disponibles sont affectés soit au mélange à fractionner, soit à au moins un autre produit de l'appareil.

Par exemple, quand le mélange à fractionner est de l'air, le nombre de passages affectés à l'azote résiduaire est réduit quand la production est supérieure à la production nominale.

L'invention a également pour objet un procédé de modification de production d'une installation de production d'au moins un corps pur par fractionnement d'un mélange dans un appareil de distillation cryogénique selon la revendication 10.

Avantageusement, quand la production de l'installation augmente, on augmente le nombre de passages attribués à des fluides à refroidir et on réduit en conséquence le nombre de passages attribués à des fluides à réchauffer.

En particulier, les fluides à refroidir sont des fluides destinés à la distillation et les fluides à réchauffer sont les produits de la distillation.

En marche maximale, on augmente le nombre de passages attribués au débit à distiller et on réduit le nombre de passages attribués à un gaz résiduaire de la distillation.

Des exemples de mise en oeuvre de l'invention vont maintenant être donnés, en regard des dessins annexés sur lesquels :
- la figure 1 représente schématiquement un mode de réalisation de l'installation selon l'invention ; et
- la figure 2 représente schématiquement une partie de la ligne d'échange de la figure 1.

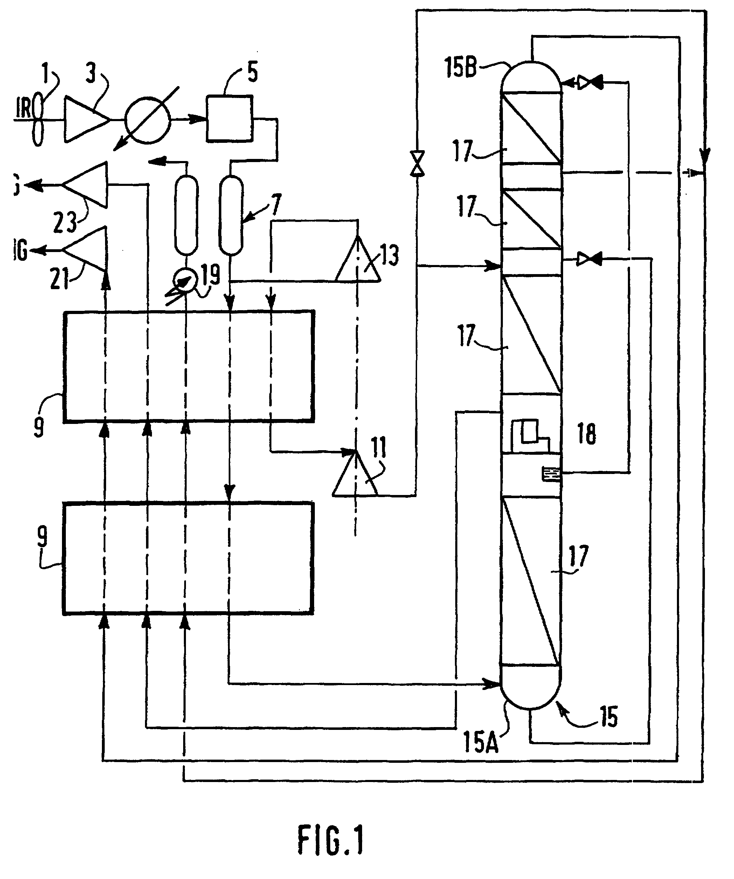

L'installation de la figure 1 comprend essentiellement une soufflante 1, un compresseur d'air principal 3, un groupe frigorifique 5, un appareil d'épuration par adsorption 7, une ligne d'échange thermique 9, une turbine de maintien en froid 11 couplée à un compresseur d'air 13, un appareil 15 de distillation constitué par une double colonne comprenant elle-même une colonne moyenne pression (MP), 15A surmontée d'une colonne basse pression (BP) 15B, les deux colonnes contenant des garnissages structurés 17, un réchauffeur de régénération 19, un compresseur d'azote 21 et un compresseur d'oxygène 23.

Pour décrire le fonctionnement de cette installation, on supposera tout d'abord qu'elfe est en marche nominale (480 T/J) d'oxygène. Dans ce cas, la soufflante d'air 1 ne marche pas et le débit nominal d'air est comprimé à 5x10⁵ Pa par le compresseur 3 uniquement, refroidi à la température ambiante, épuré dans l'appareil 7 et divisé en deux débits. Un de ces débits est envoyé directement à la ligne d'échange 9 où il est refroidi jusqu'au voisinage de son point de rosée sous 5 x 10⁵ Pa, avant d'être injecté au bas de la colonne moyenne pression 15A. L'autre débit est comprimé par le compresseur 13, refroidi partiellement dans la ligne d'échange 9 et détendu dans la turbine 11 puis envoyé à la colonne basse pression 15B.

Du liquide riche prélevé en cuve de la colonne moyenne pression 15A est détendu vers 10⁵ Pa et injecté à un niveau intermédiaire de la colonne basse pression 15B et du liquide pauvre prélevé en tête de la colonne moyenne pression 15A est détendu vers 10⁵ Pa et injecté au sommet de la colonne basse pression 15B.

Un débit d'azote impur, soutiré de la colonne basse pression 15B est réchauffé dans la ligne d'échange 9 pour être ensuite envoyé à l'appareil d'épuration 7 pour le régénérer après réchauffement éventuel dans le réchauffeur 19.

Un débit d'oxygène gazeux est soutiré de la cuve de la colonne basse pression 15B et passe dans la ligne d'échange 9 pour y être réchauffé avec un débit d'azote gazeux soutiré du sommet de la colonne basse pression 15B. L'azote et l'oxygène sont ensuite comprimés par les compresseurs 21 et 23 respectivement.

Pour permettre à l'installation de fonctionner à 130 % de sa production nominale (620 T/J) d'oxygène, on met en marche une soufflante 1, choisie pour traiter un débit volumique voisin de celui du compresseur 3 et fournir à l'échappement une pression de 1,3 x 10⁵ Pa voisine du rapport des productions. De cette façon, le compresseur 3, dimensionné pour fonctionner à sa capacité nominale lorsque sa pression d'aspiration égale la pression atmosphérique peut, tout en continuant à traiter un débit volumique constant, absorber l'augmentation de débit massique. Ainsi, la conservation du débit à l'aspiration du compresseur 3 est assurée et la pression de l'air d'alimentation s'élève à 6.5 x 10⁵ Pa.

Le groupe frigorifique 5 est dimensionné sur la production maximale (130 % de la production nominale) ; or l'appareil d'épuration d'air 7 est dimensionné sur la production nominale. Quand le débit d'air d'alimentation augmente jusqu'à sa valeur maximale, le débit de CO₂ contenu dans l'air augmente proportionnellement et donc on réduit le temps de cycle de l'appareil d'environ 11 % afin d'adsorber tout le CO₂, tout en s'assurant que le débit de régénération chauffé dans le réchauffeur 19 ne dépasse pas le débit de régénération en marche nominale de plus de 20 %.

**Tableau 1 :**

| | 480 T/J (Fig. 1) | 620 T/J (Fig. 1) |
|---|---|---|
| Pression bouteilles (10⁵Pa a) | 5,26 | 6,4 |
| Température de l'air à épurer °C | 10 | 10 |
| Débit d'air (Nm³/h) | 68 660 | 89 196 |
| Débit d'eau (kg/h) | 131 | 141 |
| Débit de CO₂ (kg/h) | 54 | 70 |
| Temps de cycle (mn) | 180 | 160 |
| Débit de régénération (Nm³/h) | 11 404 | 13 677 |

Grâce à la présence des garnissages structurés 17 dans les colonnes 15, les débits volumiques sont maintenus par une montée en pression approximativement proportionnelle à l'augmentation de capacité quand on s'approche de la production maximale. Le phénomène de Filtrage ne se rencontre pas dans ces conditions avec les garnissages structurés, étant donné que ces garnissages sont capables de supporter des charges de liquide de 30 à 50 % supérieures à la capacité nominale. Ceci n'est pas vrai pour les plateaux perforés dont l'écartement et les descentes de liquide ne peuvent traiter de débits supérieurs à ceux pour lesquels ils sont dimensionnés.

**Tableau 2 :**

| | Marche 480 T/J | Evolution 620 T/J |
|---|---|---|
| Pression tête MP (10⁵ Pa a) | 4,92 | 6,07 |
| Pression colonne BP (10⁵ Pa a) | 1,35 | 1,72 |
| Débit gazeux en cuve de colonne BP (Nm³/h) | 36 372 | 47 192 |
| Débit gazeux en tête de colonne MP (Nm³/h) | 69 339 | 91 974 |

Le tableau 2 montre la conservation quasi-identique des débits volumiques dans les colonnes, essentiellement due à la présence des garnissages structurés.

Les colonnes 15 elles-mêmes ont évidemment une épaisseur de viroles capable de supporter l'augmentation de pression entraînée par la production maximale.

Les compresseurs 21 et 23 sont légèrement surdimensionnés par rapport au nominal et, en régime maximal, peuvent encore délivrer la pression demandée.

En variante, la soufflante 1 peut être enlevée et le compresseur 3 dimensionné pour les conditions extrêmes de fonctionnement.

Dans ces conditions, l'appareil pourra passer continûment de la production nominale à la production maximale en jouant sur les aubages variables à l'entrée du compresseur.

Enfin, on sait que pour un appareil qui distille de l'air dans une double colonne, du type de la figure 1, la pression de compression de l'air est fonction des pressions de sortie des produits séparés dans la distillation, des pertes de charges de ces produits dans la ligne d'échange et dans la régénération de l'épuration de l'azote résiduaire, de l'écart de température au vaporiseur principal, des pertes de charge dans les colonnes, et de la perte de charge engendrée par l'air dans la ligne d'échange. Dans la colonne basse pression, il existe une production critique qui détermine, compte tenu de sa pression de sortie imposée et des pertes de charge dans la ligne d'échange et la colonne basse pression, les pressions suivantes :
- la pression minimum en cuve de la colonne basse pression, c'est-à-dire au vaporiseur principal, donc la pression de condensation de l'azote en tête de la colonne moyenne pression et (compte tenu des pertes de charge sur la colonne moyenne pression et sur l'air dans la ligne d'échange),
- la pression de refoulement du compresseur d'air.

En régime de production maximum, il est nécessaire, pour repousser suffisamment la limite d'engorgement, que la pression des colonnes augmente plus vite que les pertes de charge des produits sortants, de sorte que pour un produit qui n'est pas valorisé, tel l'azote impur, on pourra augmenter sa perte de charge pour que sa pression soit tout juste suffisante pour régénérer les adsorbants à pression atmosphérique. Cette augmentation est obtenue en réduisant le nombre de passages d'azote résiduaire au profit des passages d'air, lequel verra donc sa perte de charge baisser. A pression de distillation fixée, on réduit l'énergie du compresseur d'air qui refoule à pression plus basse.

Or, il est clair que d'autres redistributions des passages pourraient présenter un intérêt selon les types de produits requis.

Ainsi, si en marche maximale, on réduit le nombre de passages affectés à l'azote résiduaire, les passages libérés pourraient être affectés à un autre produit ou des autres produits de distillation qui se réchauffe(nt) dans la ligne d'échange, au lieu de les affecter à l'air, comme décrit ci-dessus. De cette façon, on peut augmenter la pression de sortie d'au moins un autre produit de distillation, étant donné que les pertes de charge sont réduites.

Il est à noter particulièrement que cette façon de redistribuer les passages de la ligne d'échange s'applique à des installations autres que des installations de distillation de l'air.

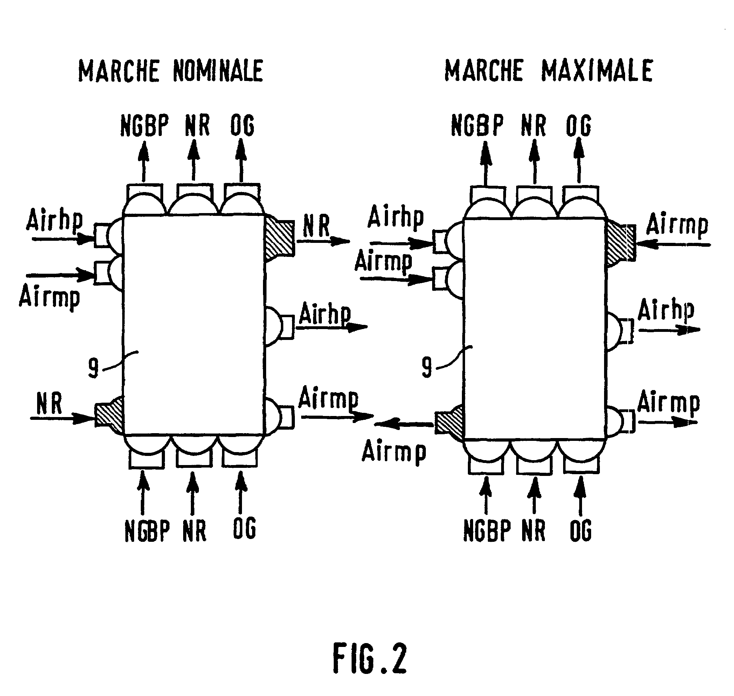

Conformément à la figure 2, le changement de marche de la production s'accompagne de la redistribution des fluides dans la ligne d'échange 9 du type échangeur à plaques. Dans la partie supérieure de celle-ci dans la figure 1, on voit deux entrées et trois sorties de fluides. Seul un des quatre corps de l'échangeur 9 est illustré. L'air d'alimentation est à deux pressions (HP, MP), l'air à la haute pression (HP) venant du compresseur 13 et l'air à moyenne pression (MP) venant directement de l'épuration 7. En marche nominale, l'air est refroidi à contre-courant du débit d'oxygène de la colonne basse pression 15B, du débit d'azote du sommet de la colonne basse pression 15B et du débit d'azote résiduaire destiné à régénérer l'appareil d'épuration 7. Ces derniers fluides sont réchauffés.

En marche nominale, l'air MP est distribué sur 48 passages par corps de l'échangeur 9 avec des pertes de charge de 200 mbar et l'azote résiduaire est distribué sur 30 passages avec des pertes de charge de 94 mbar (voir tableaux 3 et 4).

En marche maximale, onze des passages traversés par l'azote résiduaire en marche nominale sont traversés par l'air à moyenne pression et les pertes de charge de cet air sont réduites à 186 mbar tandis que les pertes de charge pour l'azote résiduaire qui n'échange plus que sur 19 passages montent à 259 mbar.

Comme en marche maximale, la pression de l'air d'alimentation augmente ainsi que celle des produits sortants, on peut se permettre des pertes de charge plus importantes sur le faisceau d'azote résiduaire qui va à l'atmosphère et des pertes de charge moins importantes sur le faisceau d'air qui constitue toute l'énergie de pression rentrée dans le système.

**Tableau 3 :**

| Ligne d'échange 480 T/j | | | | | |
|---|---|---|---|---|---|
| | Air MP | Air HP | NGBP | OG | NR |
| Q total Nm³/h | 63 100 | 3 500 | 25 000 | 14 013 | 27 587 |
| Q/corps Nm³/h | 15 775 | 875 | 6 250 | 3 503 | 6 897 |
| Nombre de passages/corps | 48 | 8 | 32 | 14 | 30 |
| Q par passage/corps | 329 | 109 | 195 | 250 | 230 |
| Pression 10⁵ Pa | 5,156 | 7,069 | 1,257 | 1,354 | 1,255 |
| Perte de charge (mbar) | 200 | 21 | 70 | 117 | 94 |

**Tableau 4 :**

| Ligne d'échange évolution 620 T/j | | | | | | |
|---|---|---|---|---|---|---|
| | Air MP | Air MP | Air HP | NGBP | OG | NR |
| Q total/Nm³/h | 67 591 | 15 489 | 3 500 | 33 000 | 18 200 | 35 380 |
| Q/corps/Nm³/h | 16 898 | 3 872 | 875 | 8 250 | 4 550 | 8 845 |
| Passages | 48 | 11 | 8 | 32 | 14 | 19 |
| Q par passage | 352 | 352 | 109 | 258 | 325 | 466 |
| Pression 10⁵ Pa | 6,291 | 6,291 | 9,076 | 1,615 | 1,718 | 1,614 |
| Perte de charge (mbar) | 186 | 186 | 16 | 90 | 147 | 259 |

## Revendications

1. Installation de production de débits variables d'au moins un corps pur par fractionnement d'un mélange dans un appareil de distillation (15), contenant essentiellement des garnissages structurés (17) et dimensionné pour traiter un débit nominal dudit mélange à pression nominale, ayant des colonnes avec une épaisseur de virole capable de supporter l'augmentation de la pression entraînée par une production maximale comprenant, pour obtenir une production supérieure à la production nominale, des moyens pour augmenter, proportionnellement au rapport desdites productions, le débit dudit mélange distillé dans l'appareil (15), et **caractérisé en ce qu'**elle comprend des moyens (1, 3, 9) pour augmenter la pression de fonctionnement de l'appareil de façon à augmenter la limite d'engorgement de l'appareil dans des proportions voisines pour obtenir une production supérieure à la production nominale.

2. Installation selon la revendication 1 dans laquelle le mélange est: de l'air.

3. Installation selon l'une des revendications 1 ou 2 comprenant un compresseur du mélange à fractionner dimensionné sur la capacité nominale et, en amont de celui-ci, une soufflante (1).

4. Installation selon l'une des revendications 1 ou 2 comprenant un compresseur du mélange à fractionner (3) dimensionné sur la capacité maximale.

5. Installation selon l'une des revendications 1 à 4, comprenant un système d'épuration du mélange à fractionner (7) du type à adsorption dimensionné pour épurer le débit nominal capable de fonctionner avec un temps de cycle réduit quand le débit à fractionner est supérieur au débit nominal, le système étant capable d'être régénéré par un débit de gaz produit par l'appareil (15) réduit par rapport au débit de régénération en marche nominale de l'appareil, dans une proportion inférieure au rapport entre le débit à fractionner et le débit nominal.

6. Installation selon l'une des revendications précédentes comprenant une ligne d'échange (9) dans laquelle s'effectue un échange thermique indirect entre le mélange à fractionner qui s'y refroidit et au moins un produit de l'appareil (15) qui s'y réchauffe, la ligne d'échange étant dimensionnée sur le régime de production nominale, et dans laquelle le rapport entre le nombre de passages affectés au mélange à fractionner et le nombre de passages affectés à au moins un produit de l'appareil est variable selon le régime de production établi.

7. Installation selon l'une des revendications précédentes comprenant une ligne d'échange (9) dans laquelle s'effectue un échange thermique indirect entre le mélange à fractionner qui s'y refroidit et plusieurs produits de l'appareil qui s'y réchauffent, la ligne d'échange étant dimensionnée sur le régime de production nominale, et dans laquelle le rapport entre le nombre de passages affectés à un produit de l'appareil, et le nombre de passages affectés à au moins un autre produit de l'appareil est variable selon le régime de production établi.

8. Installation selon la revendication 6 ou 7 dans laquelle, quand la production est supérieure à la production nominale, le nombre de passages affectés à au moins un produit de l'appareil est réduit par rapport au nombre qui y sont affectés en marche nominale, et les passages ainsi rendus disponibles sont affectés soit au mélange à fractionner, soit à au moins un autre produit de l'appareil (15).

9. Installation selon l'une des revendications 6, 7 ou 8 dans laquelle le mélange à fractionner est de l'air, l'appareil (15) produit de l'azote résiduaire et le nombre de passages de la ligne d'échange (9) affectés à l'azote résiduaire est réduit quand la production est supérieure à la production nominale.

10. Procédé de modification de production d'une installation de production d'au moins un corps pur par fractionnement d'un mélange dans un appareil de distillation cryogénique (15) contenant essentiellement des garnissages structurés (17) et dimensionnés pour traiter un débit nominal dudit mélange dans lequel pour passer d'une production nominale à une production plus élevée,
i) on augmente le débit du mélange à fractionner sensiblement dans le rapport desdites productions, et **caractérisé en ce que**
ii) on augmente en même temps la pression de fractionnement de l'appareil (15) de façon à augmenter la limite d'engorgement de l'appareil.

## Claims

1. Plant for producing variable outputs of at least one pure substance by fractionation of a mixture in a distillation apparatus (15) which essentially contains structured packings (17) and is designed to handle a nominal flow rate of the said mixture at a nominal pressure, having columns with a shell thickness capable of withstanding the increase in the pressure generated by the maximum production level comprising, in order to obtain a production level above the nominal production level, means for increasing, proportionally to the ratio of the said production levels, the flow rate of the said mixture distilled in the apparatus (15), and **characterized in that** it comprises means (1, 3, 9) for increasing the operating pressure of the apparatus so as to increase the flooding limit of the apparatus in similar proportions in order to obtain a production level above the nominal production level.

2. Plant according to Claim 1, in which the mixture is air.

3. Plant according to either of Claims 1 and 2, comprising a compressor, for compressing the mixture to be fractionated, which is dimensioned to the nominal capacity and, upstream of the latter, a blower (1).

4. Plant according to either of Claims 1 and 2, comprising a compressor (3), for compressing the mixture to be fractionated, dimensioned to the maximum capacity.

5. Plant according to one of Claims 1 to 4, comprising a system (7) for purifying the mixture to be fractionated, of the adsorption type, dimensioned to purify the nominal inflow and capable of operating with a reduced cycle time when the inflow to be fractionated is greater than the nominal inflow, the system being capable of being regenerated by a flow of gas produced by the apparatus (15) reduced with respect to the rate of regeneration in nominal operation of the apparatus, in a proportion less than the ratio of the inflow to be fractionated to the nominal inflow.

6. Plant according to one of the preceding claims, comprising an exchange line (9) in which indirect heat exchange takes place between the mixture to be fractionated, which is cooled therein, and at least one product from the apparatus (15), which is warmed therein, the exchange line being dimensioned to the nominal production conditions, and in which exchange line the ratio of the number of passages assigned to the mixture to be fractionated to the number of passages assigned to at least one product from the apparatus can be varied according to the steady-state production conditions.

7. Plant according to one of the preceding claims, comprising an exchange line (9) in which indirect heat exchange takes place between the mixture to be fractionated, which is cooled therein, and several products from the apparatus, which are warmed therein, the exchange line being dimensioned according to the nominal production conditions, and in which exchange line the ratio of the number of passages assigned to a product from the apparatus to the number of passages assigned to at least one other product from the apparatus can vary depending on the steady-state production conditions.

8. Plant according to Claim 6 or 7, in which, when the production level is greater than the nominal production level, the number of passages assigned to at least one product from the apparatus is reduced with respect to the number of passages which are assigned thereto in nominal operation and the passages thus made available are assigned either to the mixture to be fractionated or to at least one other product from the apparatus (15).

9. Plant according to one of Claims 6, 7 or 8, in which the mixture to be fractionated is air, the apparatus (15) produces waste nitrogen and the number of passages in the exchange line (9) which are assigned to the waste nitrogen is reduced when the production level is greater than the nominal production level.

10. Process for modifying the production in a plant for producing at least one pure substance by fractionation of a mixture in a cryogenic distillation apparatus (15) essentially containing structured packings (17) dimensioned to handle a nominal inflow of the said mixture, in which process, in order to pass from a nominal production level to a higher production level:
i) the flow rate of the mixture to be fractionated is increased approximately in the ratio of the said production levels and **characterized in that**
ii) at the same time, the fractionation pressure in the apparatus (15) is increased so as to increase the flooding limit of the apparatus.

## Patentansprüche

1. Anlage zur Produktion von variablen Durchflußmengen mindestens einer reinen Substanz durch Fraktionierung eines Gemischs in einer Destillationsapparatur (15), die im wesentlichen geordnete Packungen (17) enthält, für die Behandlung einer Nominaldurchflußmenge des Gemischs bei Nominaldruck dimensioniert ist und Säulen mit einer Manteldicke, die die mit einer Maximalproduktion einhergehende Druckerhöhung aushalten kann, aufweist, die zur Erzielung einer über der Nominalproduktion liegenden Produktion Mittel zur dem Verhältnis der Produktionen entsprechenden Erhöhung der Durchflußmenge des in der Apparatur (15) destillierten Gemischs enthält und **dadurch gekennzeichnet ist, daß** sie Mittel (1, 3, 9) zur Erhöhung des Betriebsdrucks der Anlage zwecks Anhebung der Flutgrenze der Apparatur in ähnlichen Maßen zur Erzielung einer über der Nominalproduktion liegenden Produktion enthält.

2. Anlage nach Anspruch 1, in der es sich bei dem Gemisch um Luft handelt.

3. Anlage nach Anspruch 1 oder 2 mit einem für die Nominalkapazität dimensionierten Verdichter für das zu fraktionierende Gemisch und einem dem Verdichter vorgeschalteten Gebläse (1).

4. Anlage nach Anspruch 1 oder 2 mit einem für die Maximalkapazität dimensionierten Verdichter (3) für das zu fraktionierende Gemisch.

5. Anlage nach einem der Ansprüche 1 bis 4 mit einem System (7) zur Reinigung des zu fraktionierenden Gemischs vom Adsorptionstyp, das für die Reinigung der Nominaldurchflußmenge dimensioniert ist, mit einer verkürzten Zykluszeit arbeiten kann, wenn die zu fraktionierende Durchflußmenge über der Nominaldurchflußmenge liegt, und mit einer von der Apparatur (15) produzierten Gasdurchflußmenge, die gegenüber der Regenerationsdurchflußmenge bei Nominalbetrieb der Apparatur in einem Maße, das kleiner als das Verhältnis zwischen der zu fraktionierenden Durchflußmenge und der Nominaldurchsatzmenge ist, verringert ist, regeneriert werden kann.

6. Anlage nach einem der vorhergehenden Ansprüche mit einer für den Betrieb bei Nominalproduktion dimensionierten Austauschleitung (9), in der ein indirekter Wärmeaustausch zwischen dem zu fraktionierenden Gemisch, das sich darin abkühlt, und mindestens einem Produkt aus der Apparatur, sich darin erwärmt, erfolgt und in der das Verhältnis zwischen der Zahl der für das zu fraktionierende Gemisch vorgesehenen Durchgänge und der Zahl der für mindestens ein Produkt aus der Apparatur vorgesehenen Durchgänge einem herrschenden Produktionsbetriebszustand entsprechend variabel ist.

7. Anlage nach einem der vorhergehenden Ansprüche mit einer für den Betrieb bei Nominalproduktion dimensionierten Austauschleitung (9), in der ein indirekter Wärmeaustausch zwischen dem zu fraktionierenden Gemisch, das sich darin abkühlt, und mehreren Produkten aus der Apparatur, die sich darin erwärmen, erfolgt und in der das Verhältnis zwischen der Zahl der für ein Produkt aus der Apparatur vorgesehenen Durchgänge und der Zahl der für mindestens ein anderes Produkt aus der Apparatur vorgesehenen Durchgänge einem herrschenden Produktionsbetriebszustand entsprechend variabel ist.

8. Anlage nach Anspruch 6 oder 7, in der bei über der Nominalproduktion liegender Produktion die Zahl der für mindestens ein Produkt aus der Apparatur vorgesehenen Durchgänge gegenüber der bei Nominalbetrieb hierfür vorgesehenen Zahl verringert wird und die somit verfügbar gewordenen Durchgänge entweder für das zu fraktionierende Gemisch oder für mindestens ein anderes Produkt aus der Apparatur (15) vorgesehen werden.

9. Anlage nach einem der Ansprüche 6, 7 oder 8, in der es sich bei dem zu fraktionierenden Gemisch um Luft handelt, die Apparatur (15) Reststickstoff produziert und die Zahl der für den Reststickstoff vorgesehenen Durchgänge der Austauschleitung (9) bei über der Nominalproduktion liegender Produktion verringert wird.

10. Verfahren zur Abänderung der Produktion einer Anlage zur Produktion mindestens einer reinen Substanz durch Fraktionierung eines Gemischs in einer Tieftemperaturdestillationsapparatur (15), die im wesentlichen geordnete Packungen (17) enthält und für die Behandlung einer Nominaldurchflußmenge des Gemischs dimensioniert ist, bei dem man zum Übergang von einer Nominalproduktion auf eine höhere Produktion
i) die Durchflußmenge des zu fraktionierenden Gemischs etwa im Verhältnis der Produktionen erhöht, und **dadurch gekennzeichnet, daß** man
ii) gleichzeitig den Fraktionierungsdruck der Apparatur (15) zwecks Anhebung der Flutgrenze der Apparatur erhöht.
